# EUROPÄISCHE PATENTANMELDUNG

(11) **EP 1 849 977 A2**
(43) Veröffentlichungstag der Anmeldung: **31.10.2007**
(21) Anmeldenummer: 07004841.8
(22) Anmeldetag: 09.03.2007
(51) Int. Cl.: F02D 41/00, F02D 41/10, F02D 23/02, F02D 33/02

(54) **Verfahren und Steuergerät zum Einstellen eines variablen Turbolader- Turbinenströmungsquerschnitts**

(30) Priorität: 26.04.2006 DE 102006019255
(71) Anmelder: Dr.Ing. h.c. F. Porsche Aktiengesellschaft, 70435 Stuttgart (DE)
(72) Erfinder: Bardoll, Albert, 71277 Rutesheim (DE); Ostertag, Ernst Friedrich, 71287 Weissach (DE)

(57) **Zusammenfassung**

Vorgestellt wird ein Verfahren zum Ansteuern eines Stellgliedes zur Einstellung eines Turbinenströmungsquerschnitts eines Turboladers eines Verbrennungsmotors in einem Kraftfahrzeug bei einem Wechsel der Last (L) des Verbrennungsmotors von einem kleineren Lastwert auf einen größeren Lastwert, wobei die Einstellung wenigstens zeitweise durch eine Regelung eines Spülgefälles des Verbrennungsmotors erfolgt. Das Verfahren zeichnet sich dadurch aus, dass der Turbinenströmungsquerschnitt bei einem Ottomotor (10) als Verbrennungsmotor zwischen dem Wechsel der Last (L)und einem Beginn einer von dem Spülgefälle abhängigen Einstellung nicht auf einem minimalen Turbinenströmungsquerschnitt festgehalten wird. Ferner wird ein Steuergerät (52) vorgestellt, das zur Steuerung des Ablaufs eines solchen Verfahrens eingerichtet ist.

## Beschreibung

Die Erfindung betrifft ein Verfahren nach dem Oberbegriff des Anspruchs 1 und ein Steuergerät nach dem Oberbegriff des Anspruchs 9.

Ein solches Verfahren und ein solches Steuergerät ist jeweils aus der EP 870 914 B1 bekannt.

Turbolader dienen bekanntlich zur Leistungssteigerung von Verbrennungsmotoren durch eine Vorverdichtung der in den Verbrennungsmotor strömenden Luft. Die Vorverdichtung erlaubt eine Steigerung von Brennraumfüllungen des Verbrennungsmotors bei gegebenen Brennraumvolumina. Da die maximale Leistung durch die Brennraumfüllung beschränkt wird, steigen die realisierbaren Drehmomente und Leistungen mit steigenden Brennraumfüllungen an. Bei Turboladern wird die für die Vorverdichtung der Luft auf der Einlassseite des Verbrennungsmotors notwendige Energie der inneren und der kinetischen Energie des Abgases entnommen. Das Abgas treibt eine Turbine an, die über eine Welle einen Verdichter antreibt.

Generell folgt die Drehmomententwicklung eines Verbrennungsmotors mit Turbolader einer plötzlich erhöhten Drehmomentanforderung mit einer gewissen Verzögerung, die auch als Turboloch (englisch: lag) bekannt ist. Das Ausmaß der Verzögerung hängt von dem Trägheitsmoment der rotierenden Teile des Turboladers und von der aus dem Abgas auf die Turbine übertragenen Leistung ab. Diese Leistung wird durch den Abgasmassenstrom und das Enthalpie-Gefälle über der Turbine bestimmt. Bei Ottomotoren wurden bisher konventionelle Turbolader ohne verstellbare Turbinengeometrie benutzt. Für eine Regelung des Ladedrucks weisen konventionelle Turbolader eine Bypassklappe oder Waste-Gate-Klappe auf, die bei einem positiven Lastwechsel, also bei einem Wechsel der Last von einem kleineren auf einen größeren Lastwert, geschlossen wird. Als Folge ergibt sich bei ansonsten unveränderten Betriebsparametern ein erhöhter Abgasmassenstrom über die Turbine.

Bei Turboladern mit verstellbarem Turbinenströmungsquerschnitt, wie sie bei Dieselmotoren seit längerem in Serie verwendet werden, wird der Turbinenströmungsquerschnitt bei einem positiven Lastwechsel vorübergehend verringert. Als Folge ergibt sich ein verändertes Aufstauverhalten des Abgases vor der Turbine. Der Abgasgegendruck steigt und führt, bei zunächst unverändertem Abgasmassenstrom, zu einem vergrößerten Enthalpie-Gefälle über der Turbine.

Der erhöhte Abgasgegendruck wirkt jedoch bei geöffnetem Auslassventil auf den Brennraum zurück und führt dort nach der EP 870 914 zu Gaswechselverlusten und einer Verschlechterung des Wirkungsgrades des Verbrennungsmotors. Als unerwünschte Folge gibt die EP 870 914 einen suboptimalen Kraftstoffverbrauch und eine gestiegene Wahrscheinlichkeit für das Auftreten unerwünschter Luftmangelverbrennungen an, die mit einer Rauchentwicklung verbunden sind.

Zur Abhilfe sieht die EP 870 914 B1 in diesem Zusammenhang vor, den Turbinenströmungsquerschnitt bei einem positiven Lastwechsel auf einen minimalen Turbinenströmungsquerschnitt zu reduzieren und dort während einer Verschlusszeit zu halten, bis ein laufend ermittelter Betriebsparameter einen vorbestimmten Sollwert erreicht. Das Schließen erfolgt mit dem Ziel einer schnellen Vergrößerung des Drehmomentes. Anschließend soll der Turbinenströmungsquerschnitt wieder kontinuierlich vergrößert werden. Nach der Schließphase, in der nach einer Ausgestaltung des Verfahrens der EP 870 914 bereits der Zielwert der einzuspritzenden Kraftstoffmenge und damit der Zielwert des Drehmoments erreicht werden soll, sieht die EP 870 914 B1 in einer weiteren Ausgestaltung vor, den Turbinenströmungsquerschnitt mit Hilfe eines Regelkreises zu öffnen, wobei ein Differenzdruck zwischen einem Ladedruck im Einlasstrakt und einem Abgasdruck (Abgasgegendruck) im Auslasstrakt einer Brennkraftmaschine ermittelt und auf einen Sollwert geregelt wird. Dieser Differenzdruck stellt das sogenannte Spülgefälle dar.

Nach der EP 870 914 bewirkt die Einregelung auf den vorgegebenen Soll-Differenzdruck während des dynamischen Betriebes, dass das Spülgefälle zwischen Auslasstrakt und Einlasstrakt der Brennkraftmaschine in einem günstigen Bereich im Hinblick auf den Wirkungsgrad der Brennkraftmaschine gehalten wird. Gaswechselverluste, bedingt durch einen relativ zum Ladedruck zu hohen Abgasgegendruck, welcher beim Ausschieben der Abgase durch die Kolben der Brennkraftmaschine erst überwunden werden müsste, sollen durch die Einregelung eines bestimmten Spülgefälles auf ein Minimum reduziert werden.

Mit anderen Worten: Die Spülgefälleregelung nach der EP 870 914 erfolgt bei einer Anforderung eines größeren Drehmoments erst in einer zweiten Phase und dort mit dem Ziel einer Wirkungsgradoptimierung. Die eigentliche Drehmomentaufbauphase findet beim Gegenstand der EP 870 914 in einer ersten Phase statt, in der der Turbinenströmungsquerschnitt ungeregelt auf einen minimalen Querschnitt eingestellt und dort festgehalten wird.

Turbolader mit variabler Turbinengeometrie wurden bisher nur bei Dieselmotoren in Serie verwendet. Auch wenn Ottomotoren bisher aufgrund höherer Abgastemperaturen mit Turboladern betrieben wurden, die eine feste Turbinengeometrie aufweisen, erwartet man bei einer Verwendung von Turboladern mit variabler Turbinengeometrie bei Ottomotoren prinzipiell ebenfalls positive Auswirkungen auf den unerwünschten Turboloch-Effekt. Die bei Erprobungen beobachteten positiven Auswirkungen blieben jedoch hinter den Erwartungen zurück. Vielmehr wurde ein ungleichmäßiger Drehmomentverlauf in positiven Lastsprüngen beobachtet, was die Fahrbarkeit beeinträchtigt.

Vor diesem Hintergrund besteht die Aufgabe der Erfindung in der Angabe eines Verfahrens und eines Steuergeräts der jeweils eingangs genannten Art, mit dem sich ein beschleunigter und gleichmäßiger Drehmomentaufbau eines Ottomotors als Verbrennungsmotor bei einem positiven Lastwechsel erzielen lässt. Diese Aufgabe wird bei einem Verfahren und einem Steuergerät der jeweils eingangs genannten Art durch die kennzeichnenden Merkmale der unabhängigen Ansprüche gelöst.

Mit diesen Merkmalen, nach denen der Turbinenströmungsquerschnitt zwischen dem positiven Lastwechsel und dem Beginn einer Spülgefälleregelung nicht auf einen minimalen Turbinenströmungsquerschnitt verstellt und dort zunächst festgehalten wird, sieht die Erfindung eine Umkehrung der Lehre der EP 870 914 B1 vor. Die Erfinder haben erkannt, dass der an sich erwünschte Aufbau des Abgasgegendrucks vor der Turbine, der sich nach der bekannten Vorgehensweise einstellt, bei einem Ottomotor kontraproduktiv wirken kann. Dies ergibt sich daraus, dass Ottomotoren im Teillastbereich gedrosselt betrieben werden, während Dieselmotoren dort in der Regel weitgehend ungedrosselt betrieben werden. Zur Erläuterung werden im Folgenden die Verhältnisse bei Dieselmotoren und Ottomotoren näher betrachtet.

Der Dieselmotor arbeitet in der Teillast mit Luftüberschuss. Das gewünschte Drehmoment wird über die zudosierte Kraftstoffmenge eingestellt, was auch als Qualitätsregelung bezeichnet wird. Im Ergebnis liefert der Dieselmotor daher auch im Teillastbereich, in dem er nur wenig Drehmoment erzeugt, einen vergleichsweise großen Abgasmassenstrom, der die Turbinendrehzahl erhöht. Das Einstellen eines minimalen Turbinenströmungsquerschnitts führt dann praktisch verzögerungslos zu einer erhöhten Turbinenleistung, einem erhöhten Ladedruck und damit zu einem schnellen Anstieg der Brennraumfüllungen und des Drehmomentes des Dieselmotors.

Die Leistung des Ottomotors wird dagegen in der Regel über die Menge des in den Brennräumen verbrannten Gemisches eingestellt, was auch als Mengenregelung bezeichnet wird. Dies gilt zumindest für Ottomotoren mit äußerer Gemischbildung (z.B. durch Saugrohreinspritzung) und Ottomotoren mit Benzin-Direkteinspritzung im so genannten Homogenbetrieb. Bei kleinen Leistungen, also bei niedrigen Drehmomenten und/oder Drehzahlen, ergibt sich dann auch nur ein entsprechend geringer Abgasmassenstrom.

In Betriebszuständen mit niedrigen Abgasmassenströmen fällt daher bei aufgeladenen Ottomotoren die Turbinendrehzahl vergleichsweise stark ab. Ein Einstellen eines minimalen Turbinenströmungsquerschnitts vergrößert dann zwar ebenfalls den Aufstau der Abgase vor der Turbine, wegen des niedrigen Abgasmassenstroms ist dadurch jedoch im ersten Moment noch keine große Steigerung der Turbinenleistung in absoluten Werten verbunden.

Jedoch wird durch den stark ansteigenden Abgasgegendruck der Luftaufwand des Ottomotors negativ beeinflusst. Dabei wird unter dem Luftaufwand die auf eine Luftdichte im Saugrohr normierte Luftdichte im Brennraum verstanden. Beträgt der Hubraum eines Ottomotors zum Beispiel 1000 cm³ und verarbeitet der Ottomotor in einem Arbeitszyklus 1,2 g Luft bei einer Luftdichte im Saugrohr von 1,2 g/dm³, ist der Luftaufwand gleich 1. Ein stark steigender Abgasgegendruck führt zu einer vergrößerten Restgasmenge in den Brennräumen und behindert daher die Füllung der Brennräume mit unverbranntem Gemisch oder Luft, was den Luftaufwand unerwünscht verringert.

Hierdurch wird als primäre unerwünschte Folge in den ersten Momenten nach einem positiven Lastsprung das Drehmoment des Motors gegenüber dem ohne Aufladung theoretisch als "Saugvolllast" bzw. bei großem Turbinenquerschnitt möglichen Wert verringert. Dies wird vom Fahrer als sehr störend empfunden. Als sekundäre Folge tritt eine Verringerung des Abgasmassenstromes auf, der der Turbine zur Verfügung steht. Diese Verringerung kann so stark sein, dass trotz des höheren Aufstaus die der Turbine zur Verfügung stehende Energie geringer ist, als bei nicht maximal verringertem Turbinenströmungsquerschnitt, so dass es zusätzlich zur Drehmomenteinbuße im ersten Moment auch zu einem insgesamt langsameren Ladedruck- und Drehmomentanstieg kommt.

Durch die Erfindung werden diese unerwünschten Effekte minimiert. Die Einstellung des Turbinenströmungsquerschnitts erfolgt ohne ein Einstellen und Festhalten eines minimalen Turbinenströmungsquerschnitts. Die Einstellung erfolgt ferner durch Regelung des Spülgefälles, da diese Größe, im Gegensatz zum absoluten Abgasgegendruck, die bestimmende Größe für eine Beeinträchtigung der Brennraumfüllung durch ein zu starkes Aufstauen der Abgase vor der Turbine ist.
Dabei erfolgt die Regelung des Spülgefälles mit der Zielsetzung, nach Möglichkeit vom Beginn des Lastsprungs an annähernd das Saugvolllast-Drehmoment zur Verfügung zu stellen, und gleichzeitig die Drehzahl des Turboladers und damit den Ladedruck schnellstmöglich zu steigern.

Eine Minimierung von Gaswechselverlusten, wie sie bei der EP 870 914 angestrebt wird, ist dabei zweitrangig. Im Gegensatz zum Gegenstand der EP 870 914 findet praktisch der gesamte Drehmomentaufbau unter dem Einfluss der auf einen raschen Drehmomentaufbau ausgelegten Spülgefälleregelung statt.

Im Ergebnis steigt das vom Ottomotor bereitgestellte Drehmoment bei einem positiven Lastwechsel dann wesentlich schneller und gleichmäßiger an, als es bei einem zwischenzeitlichen Einstellen und Festhalten eines minimalen Turbinenströmungsquerschnitts der Fall wäre.

Die gleichen Vorteile ergeben sich für entsprechende Ausgestaltungen des Steuergeräts. Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
- Figur 1: einen Ottomotor mit einem Turbolader mit variabler Turbinengeometrie;
- Fig. 2: eine Prinzip-Darstellung der Variation der Turbinengeometrie;
- Fig. 3: einen Regelkreis zur Regelung des Spülgefälles; und
- Fig. 4: zeitliche Verläufe eines Fahrerwunsches, einer Drosselklappen-Verstellung und Verstellungen eines Turbinenströmungsquerschnitts bei einem positiven Lastwechsel.

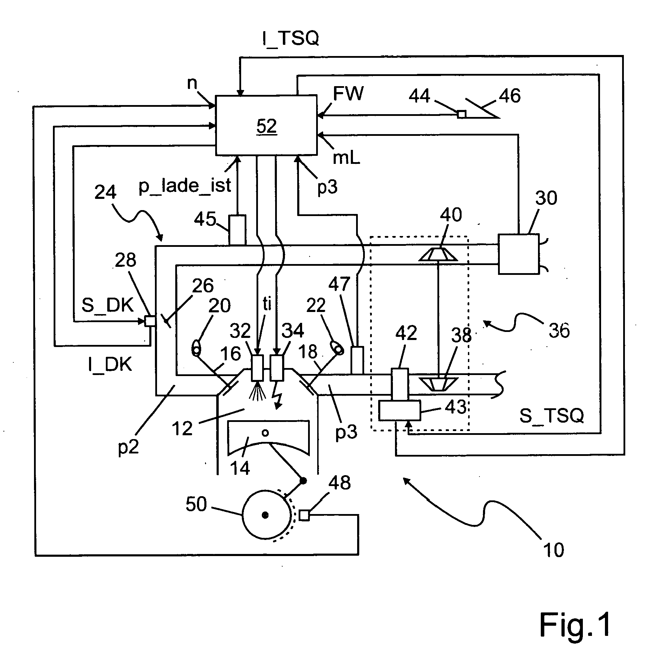

Im Einzelnen zeigt Fig. 1 einen Ottomotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller 20 und das Auslassventil 18 von einem Auslassventilsteller 22 betätigt wird. Der Einlassventilsteller 20 steuert das Einlassventil 16 in einer Ausgestaltung mit einem variablen Hub und dient so als Füllungsstellglied.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird alternativ oder ergänzend zu einer Variation des Hubes des Einlassventils 16 über eine Drosselklappe 26 eingestellt, die durch einen Drosselklappensteller 28 betätigt wird. In jedem Fall wird die Brennraumfüllung dabei maßgeblich vom Druck p2 vor dem Einlassventil 16 beeinflusst. Der Drosselklappensteller 28 weist in einer Ausgestaltung einen integrierten Drosselklappensensor auf, der eine Information I_DK über einen Istwert des Öffnungswinkels der Drosselklappe 26 bereitstellt.

Die Brennraumfüllung wird bevorzugt aus dem Signal eines Füllungssensors 30 bestimmt, der als Luftmassenmesser oder Saugrohrdrucksensor realisiert sein kann. So kann die Füllung zum Beispiel als auf die Drehzahl und Zylinderzahl normierte Ansaugluftmasse ml bestimmt werden. Es versteht sich, dass ein Saugrohrdrucksensor auch ergänzend zu einem Luftmassenmesser vorgesehen sein kann. Der Kraftstoff wird entweder in das Ansaugsystem 24 (Saugrohreinspritzung) dosiert oder durch einen Injektor 32 direkt in den Brennraum 12 eingespritzt (Direkteinspritzung).

Auf jeden Fall wird in dem Brennraum 12 eine brennfähige Brennraumfüllung erzeugt, die von einer Zündkerze 34 gezündet wird. Restgase der verbrannten Füllung des Brennraums 12 werden über das geöffnete Auslassventil 18 ausgestoßen. Dabei stellt sich ein vom Abgasmassenstrom und vom Turbinenströmungsquerschnitt eines Turboladers 36 abhängiger Druck p3 hinter dem Auslassventil 18 ein.

Der in der Figur 1 dargestellte Turbolader 36 weist eine Turbine mit einem von den ausgestoßenen Abgasen angetriebenen Turbinenrad 38 auf. Die Turbine treibt ein Verdichterrad 40 im Ansaugsystem 24 an. Der Turbolader 36 weist ferner ein Stellglied 42 mit einem elektrischen Antrieb 43 zur Steuerung der Geometrie des Turboladers 36 auf. Der elektrische Antrieb 43 ist typischerweise ein Elektromotor, der in Verbindung mit einer Mechanik des Stellgliedes 42 eine geradlinige oder gekrümmt verlaufende Stellbewegung erzeugt. Der vom Turbolader 36 erzeugte Ladedruck p_lade_ist wird von einem Ladedrucksensor 45 erfasst.

Drehmomentanforderungen FW eines Fahrers werden durch einen Fahrerwunschgeber 44 erfasst, der die Stellung eines Fahrpedals 46 des Kraftfahrzeugs erfasst. Ein Drehwinkelsensor 48 tastet Winkelmarkierungen eines drehfest mit einer Kurbelwelle des Ottomotors 10 verbundenen Geberrades 50 ab und liefert damit eine Information über die Winkellage und Winkelgeschwindigkeit der Kurbelwelle. Die Winkelgeschwindigkeit ist ein Maß für die Drehzahl n des Ottomotors 10.

Es versteht sich, dass zur Steuerung und/oder Regelung des Ottomotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Ottomotors 10 erfassen. Die Erfindung ist daher nicht auf eine Verwendung bei einem Ottomotor 10 beschränkt, der nur die bisher angegebenen Sensoren 28, 30, 44, 45, 48 aufweist. So kann das Stellglied 42 in einer Ausgestaltung eine Information I_TSQ über eine eingestellte Leitschaufelposition, also eine Lagerückmeldung für eine Regelung der Leitschaufelposition in einem geschlossenen Kreis oder für eine Modellierung des Druckes p3 oder ein Eigendiagnoseergebnis bereit stellen. Für eine Ausgestaltung der Erfindung weist der Ottomotor 10 einen zweiten Drucksensor 47 auf, der den Abgasgegendruck p3 zwischen der Turbine 38 und dem Auslassventil 18 erfasst.

Zur Steuerung des Ottomotors 10 werden die Signale des integrierten Drosselklappensensors 28, des Füllungssensors 30, des Fahrerwunschgebers 44, des Drehwinkelsensors 48, des Ladedrucksensors 45, des ggf. vorhandenen zweiten Drucksensors 47, die optional vorhandene Information I_TSQ und ggf. die Signale alternativer oder weiterer Sensoren von einem Steuergerät 52 verarbeitet, das zur Steuerung des Ablaufs des erfindungsgemäßen Verfahrens und/oder einer oder mehrerer seiner Ausgestaltungen eingerichtet, insbesondere programmiert ist. Das Steuergerät 52 zeichnet sich insbesondere dadurch aus, dass es aus den erhaltenen Informationen und Signalen Stellsignale zur Steuerung von Funktionen des Ottomotors 10 bildet. In der Ausgestaltung der Fig. 1 sind dies im Wesentlichen Drosselklappenstellsignale S_DK und Signale S_TSQ, mit denen das Steuergerät 52 einen Turbinen-Strömungsquerschnitt steuert, sowie Einspritzimpulsbreiten ti und Zündsignale.

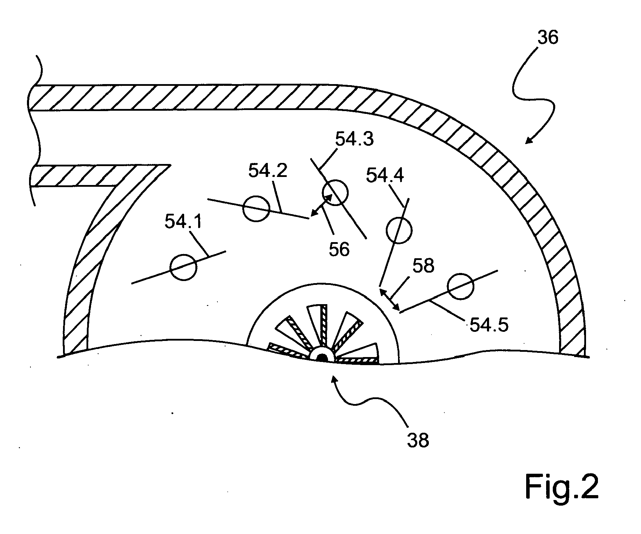

Fig. 2 zeigt eine Ausgestaltung einer Turbine eines Turboladers 36 mit ringförmig angeordneten Leitschaufeln 54.1, 54.2, 54.3, 54.4 und 54.5. Abweichend von der Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen Stellung mit einem kleinen Strömungsquerschnitt 56 und die Leitschaufeln 54.4. und 54.5 in einer weiter offenen Stellung mit einem größeren Strömungsquerschnitt 58 dargestellt. Der Grundladedruck wird dabei mit dem größeren Strömungsquerschnitt 58 dargestellt. Die Verstellung erfolgt durch das Stellglied 42, das zum Beispiel einen mit den Leitschaufeln über bewegliche Hebel verbundenen Verstellring betätigt. Details der Mechanik sind für die Erfindung nicht wesentlich.

In der Fig. 1 bildet das Steuergerät 52 als Regler zusammen mit dem Stellglied 42 als Regelstellglied, dem Ottomotor 10 als Regelstrecke und den beiden Drucksensoren 45, 47 als Istwert-Sensorik einen geschlossenen Regelkreis zur Regelung des Spülgefälles p3 - p2.

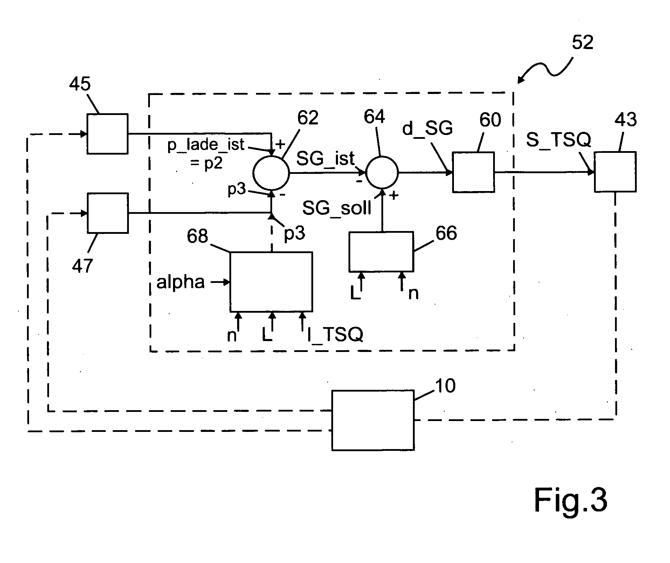

Ein solcher Regelkreis ist schematisch in der Fig. 3 dargestellt. Das Steuergerät 52 weist einen Spülgefälle-Regler 60 auf, der die Stellgröße S_TSQ zur Verstellung des Turbinenströmungsquerschnitts bildet und ausgibt. Der sich als Folge einstellende Turbinenströmungsquerschnitt bildet sich über Reaktionen des Ottomotors 10 in Werten für den Ladedruck p2 und den Abgasgegendruck p3 ab. Der Istwert p_lade_ist wird vom Ladedrucksensor 45 erfasst und als Druck p2 an das Steuergerät 52 übergeben. Die Gleichsetzung von p_lade_ist und p2 ist bei weitgehend geöffneter Drosselklappe 26 erlaubt. Der Istwert p_abg_ist für den Abgasgegendruck p3 wird in einer ersten Ausgestaltung von dem zweiten Drucksensor 47 bereitgestellt und an das Steuergerät 52 übergeben. In einer Verknüpfung 62 erfolgt die Bildung eines Istwertes SG_ist des Spülgefälles durch Subtraktion des Abgasgegendrucks p3 vom Ladedruck p2. Unter den betrachteten Randbedingungen eines positiven Lastwechsels, bei dem schnellstmöglich ein erhöhter Ladedruck bereitgestellt werden soll, ist die Drosselklappe 26 in der Regel ganz geöffnet, so dass der vor der Drosselklappe gemessene Istwert p_lade_ist mit dem Druck p2 vor den Einlassventilen 16 des Ottomotors 10 gleichgesetzt werden kann.

In einer weiteren Verknüpfung 64 wird aus dem Istwert SG_ist des Spülgefälles und einem Sollwert SG_soll des Spülgefälles eine Regelabweichung d_SG gebildet, die als Eingangsgröße für den Regler 60 dient. Der für einen schnellen Drehmomentaufbau optimale Sollwert SG_soll des Spülgefälles variiert nur wenig und kann daher als konstant betrachtet werden oder in Abhängigkeit von wenigen Betriebsparametern des Ottomotors bestimmt werden. In der Ausgestaltung, die in der Fig. 3 dargestellt ist, wird der Sollwert SG_soll durch ein mit der Last L und der Drehzahl n des Ottomotors 10 adressiertes Kennfeld 66 bestimmt.

Die Last L des Ottomotors 10 ergibt sich in einer Ausgestaltung als auf eine maximal mögliche Brennraumfüllung normierte tatsächliche Brennraumfüllung, wie sie aus Messwerten für die in den Ottomotor 10 strömende Luftmasse mL und die Drehzahl n unter Berücksichtigung der Zahl der Brennräume ermittelbar ist. In einer anderen Ausgestaltung ergibt sich die Last als mittlerer Druck im Brennraum während eines Arbeitstaktes oder als Istwert des vom Ottomotor 10 bereitgestellten Drehmomentes. Sowohl der mittlere Druck als auch der Istwert des Drehmoments kann prinzipiell durch das Steuergerät 52 aus gemessenen Betriebsparametern bestimmt werden.

Alternativ zu einer Messung der Drücke p2, p3 kann einer der beiden Drücke oder auch beide Drücke oder das Spülgefälle selbst direkt durch ein Rechenmodell aus anderen Betriebsparametern des Ottomotors 10 bestimmt werden. Wesentliche Betriebsparameter sind in diesem Zusammenhang der aktuelle Wert des Turbinenströmungsquerschnitts sowie sämtliche Betriebsparameter, die die Größe und Temperatur des Abgasmassenstroms beeinflussen. Auch hier sind die Drehzahl n und die Last L wieder wesentliche Einflussgrößen. Mit Blick auf die Abgastemperatur spielt auch der im Steuergerät gebildete Zündwinkel alpha eine Rolle.

Als Maß für den Turbinenströmungsquerschnitt kann das Lagerückmeldungssignal I_TSQ verwendet werden. Der Block 68 repräsentiert eine Ausgestaltung, bei der der Druck p3 durch ein Modell im Steuergerät berechnet wird. Bei hinreichend genauer Berechnung des Druckes p3 kann der Drucksensor 47 entfallen. Alternativ kann der modellierte Druck p3 auch zur Modellierung schneller Druckänderungen verwendet werden, wobei der gemessene Druck p3 zum Abgleich des Modells bei weniger schnellen Druckänderungen verwendet wird. Auch wenn in der Fig. 3 aus Übersichtsgründen nicht alle der in der Fig. 1 dargestellten Sensoren abgebildet sind, soll für ein Verständnis der Fig. 3 davon ausgegangen werden, dass die Signale dieser Sensoren im Steuergerät 52 vorliegen und daher zum Beispiel zur Adressierung der Blöcke 66 und 68 verwendet werden können.

Der Regler 60 ist in einer Ausgestaltung als klassischer PI-Regler mit einem Proportionalanteil (P-Anteil) und einem Integralanteil (I-Anteil) realisiert. Die Erfindung ist aber nicht auf eine PI-Regelung beschränkt, sondern kann für die Regelung jedes Verfahren verwenden, das aus einem Sollwert/Istwert-Vergleich eine Regelstellgröße S_TSQ bildet, die sich über den Ottomotor 10 als Regelstrecke in dem Istwert SG_ist abbildet, und das zu einer Annäherung des Istwertes SG_ist an den Sollwert SG_soll führt.

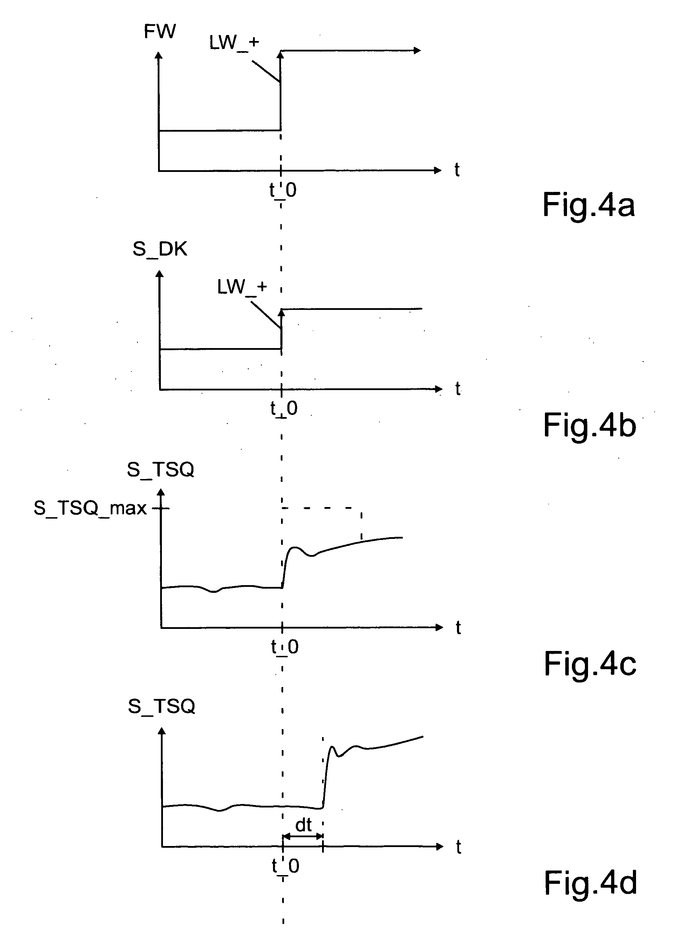

Fig. 4 zeigt zeitliche Verläufe verschiedener Betriebsparameter bei einem Ablauf einer Ausgestaltung des Verfahrens in qualitativer Form. So zeigt die Fig. 4a einen zeitlichen Verlauf eines Fahrerwunsches FW bei einem positiven Lastwechsel LW_+, der zu einem Zeitpunkt t_0 auftritt. Dabei entspricht ein hoher Wert von FW einem hohen gewünschten Drehmoment. Das Steuergerät 52 verarbeitet das Signal FW und bildet Stellsignale S_DK und S_TSQ zur Erzeugung des gewünschten höheren Drehmomentes.

Zur Erzeugung des höheren Drehmomentes wird insbesondere die Drosselklappe 26 schnell geöffnet. Dies kommt in der Fig. 4b durch den unmittelbar an den positiven Lastwechsel LW_+ anschließenden Anstieg des Stellsignals S_DK zum Ausdruck, mit dem die Drosselklappe 26 weiter geöffnet wird. Bei einer alternativen oder ergänzenden Steuerung der Brennraumfüllungen über eine Variation des Hubes des Einlassventils 16 wird entsprechend der Hub des Einlassventils vergrößert.

Fig. 4c zeigt einen möglichen Verlauf eines Stellsignals S_TSQ für den Turbinenströmungsquerschnitt, wie es sich bei der Verwendung einer Ausgestaltung eines erfindungsgemäßen Verfahrens einstellt. Dabei entspricht ein hoher Wert von S_TSQ der Einstellung eines kleinen Turbinenströmungsquerschnitts. Zum Zeitpunkt t_0 des positiven Lastwechsels LW+ wird bei dieser Ausgestaltung sofort mit der beschriebenen Spülgefälle-Regelung begonnen. Der dargestellte Verlauf des Turbinenströmungsquerschnitt-Stellsignals S_TSQ spiegelt dies qualitativ wider. Im Gegensatz zu der EP 870 914 erfolgt insbesondere kein Zufahren der Leitschaufeln auf einen minimalen Öffnungsquerschnitt und kein Halten auf dem minimalen Öffnungsquerschnitt. Bei dem aus der EP 870 914 bekannten Verfahren würde S_TSQ qualitativ dem in der Fig. 4c gestrichelt dargestellten Verlauf entsprechen, wobei S_TSQ_max zur Einstellung eines minimalen Turbinenströmungsquerschnitt führen würde. Die Erfindung kann auch einen Zwischenwert des Stellsignals S_TSQ, der zwischen dem unmittelbar vor dem Zeitpunkt t_0 gültigen Wert und dem maximalen Wert S_TSQ_max als Startwert für die Regelung nutzen. Wesentlich ist jedoch, dass der Startwert nicht dem maximalen Wert S_TSQ_max entspricht, sondern beispielsweise maximal 80 % dieses Werts beträgt.

Fig. 4d zeigt eine weitere Ausgestaltung, bei der eine vom Spülgefälle abhängige Ansteuerung des Stellgliedes 42 mit einer Verzögerung dt gegenüber dem Wechsel LW_+ der Last L erfolgt.

Durch das bei dieser Ausgestaltung erfolgende Verzögern der Stellgliedansteuerung kann der Abgasmassenstrom bei geöffneter Drosselklappe 26 zunächst gesteigert werden. Wenn dann nach Ablauf der kurzen Verzögerungszeit eine zunächst schließende Verstellung durch eine Spülgefälleregelung erfolgt, steht bereits ein gesteigerter Abgasmassenstrom zur Verfügung, so dass die auf die Turbine übertragene Abgasenergie wesentlich größer ist als bei einer unverzögerten Verstellung. Auch diese Ausgestaltung verringert oder verhindert Verschlechterungen des Luftaufwandes bei einem positiven Lastwechsel.

Dabei kann ein Ausmaß der Verzögerung dt in Abhängigkeit von wenigstens einem Betriebsparameter des Ottomotors 10 vorgegeben werden. Die Verzögerungszeitspanne dt entspricht typischerweise der Zeitdauer einiger weniger Arbeitsspiele des Ottomotors 10, in denen zum Beispiel 2-10 vergrößerte Brennraumfüllungen ausgestoßen werden. Der Ottomotor 10 wird dann während der Verzögerungszeitspanne dt mit vergrößertem Signal S_DK, aber noch nicht vergrößertem Signal S_TSQ betrieben. Die Länge der Verzögerungszeitspanne dt kann in einer einfachen Ausgestaltung als Festwert vorgegeben werden. Es ist jedoch bevorzugt, dass das Ausmaß der Verzögerung, also die Länge der Zeitspanne dt, in Abhängigkeit von wenigstens einem Betriebsparameter des Ottomotors 10 vorgegeben wird. Als Betriebsparameter kommt dazu insbesondere die Drehzahl n des Ottomotors 10 bei dem positiven Lastwechsel LW_+ in Frage. Je höher die Drehzahl n ist, desto größer ist der Abgasmassenstrom als Größe, die zur Zahl der pro Zeiteinheit erzeugten verbrannten Brennraumfüllungen proportional ist.

Bei einem bestimmten Ottomotor 10 hat sich zum Beispiel eine Verzögerungszeitspanne dt von 200 ms bei n = 2000 min⁻¹ und eine Verzögerungszeitspanne dt von 50 ms bei n = 6000 min⁻¹ als optimal herausgestellt. Bei einem 6-Zylindermotor mit je einem Turbolader für je drei Zylinder werden zum Beispiel in den genannten 50 ms Abgase von (50*3*6000)/(1000 * 60), also von 7 bis 8 Brennraumfüllungen ausgestoßen. Im Allgemeinen wird das Ausmaß der Verzögerung bei einem kleineren Wert der Drehzahl n auf größere Werte festgelegt als bei einem größeren Wert der Drehzahl.

Der Abgasmassenstrom ist jedoch nicht nur von der Zahl der Brennraumfüllungen pro Zeiteinheit, sondern auch von der Größe der einzelnen Brennraumfüllungen abhängig. In einer weiteren bevorzugten Ausgestaltung berücksichtigt das Steuergerät 52 bei der Festlegung des Werts der Verzögerungszeitspanne dt eine Last L des Ottomotors 10 vor dem positiven Lastwechsel LW_+ als weiteren Betriebsparameter. Dabei wird das Ausmaß der Verzögerung dt bei einem kleineren Wert der Last L auf größere Werte festgelegt als bei einem größeren Wert der Last L.

Im Rahmen einer weiteren Ausgestaltung ist vorgesehen, dass die Spülgefälleregelung nur in ersten Betriebszuständen durchgeführt wird, zu denen insbesondere instationäre Betriebszustände nach einem positiven Lastwechsel LW_+ gehören. Dabei erfolgt in zweiten Betriebszuständen eine Einstellung des Turbinenströmungsquerschnitts in einem geschlossenen Regelkreis mit dem Ladedruck p_lade_ist als zu regelnder Größe. Die zweiten Betriebszustände sind bevorzugt stationäre Betriebszustände.

Vorgesehen ist ferner eine Funktion, die unabhängig von einer Spülgefälleregelung eine Einstellung eines ungewollt zu hohen Ladedrucks verhindert. Eine solche Funktion kann zum Beispiel durch eine parallel zur Spülgefälleregelung erfolgende Ladedruckregelung, Ladedrucksteuerung oder Ladedruckbegrenzung erfolgen, die einen alternativen Wert der Stellgröße des Turbinenströmungsquerschnitts generiert. Die Verhinderung des zu großen Ladedrucks erfolgt dann durch eine Maximalwertauswahl zwischen den Turbinenströmungsquerschnitten, die von der Spülgefälleregelung und der parallel laufenden Ladedruckregelung, Ladedrucksteuerung oder Ladedruckbegrenzung eingestellt werden würden. Dabei wird immer der größere der beiden Querschnitte eingestellt.

Unmittelbar nach einem positiven Lastwechsel würde zum Beispiel ein P-Anteil einer Pl-Ladedruckregelung einen für die Drehmomententwicklung kontraproduktiv kleinen Turbinenströmungsquerschnitt fordern, während die Spülgefälleregelung mit Rücksicht auf ein für die Drehmomententwicklung optimales Spülgefälle einen größeren Turbinenströmungsquerschnitt fordern würde. Die Maximalwertauswahl stellt dann sicher, das der kontraproduktive kleine Strömungsquerschnitt nicht eingestellt wird. Droht der Ladedruck dagegen bei optimalem Spülgefälle unerwünscht stark anzusteigen, wird die Ladedruckregelung den größeren Querschnitt fordern und die Maximalwertauswahl wird diesen größeren Querschnitt erlauben.

## Patentansprüche

1. Verfahren zum Ansteuern eines Stellgliedes (42) zur Einstellung eines Turbinenströmungsquerschnitts eines Turboladers (36) eines Verbrennungsmotors in einem Kraftfahrzeug bei einem Wechsel der Last (L) des Verbrennungsmotors von einem kleineren Lastwert auf einen größeren Lastwert, wobei die Einstellung wenigstens zeitweise durch eine Regelung eines Spülgefälles des Verbrennungsmotors erfolgt, **dadurch gekennzeichnet, dass** der Turbinenströmungsquerschnitt bei einem Ottomotor (10) als Verbrennungsmotor zwischen dem Wechsel der Last und einem Beginn einer von dem Spülgefälle abhängigen Einstellung nicht auf einem minimalen Turbinenströmungsquerschnitt festgehalten wird.

2. Verfahren nach Anspruch 1, **dadurch gekennzeichnet, dass** ein Istwert (SG_ist) des Spülgefälles als Differenz aus einem gemessenen Ladedruckwert (p_lade_ist) und einem im Strömungsrichtung von Abgasen des Ottomotors (10) vor dem Turbinenströmungsquerschnitt herrschenden Abgasgegendruck (p3) bestimmt wird.

3. Verfahren nach Anspruch 2, **dadurch gekennzeichnet, dass** der Abgasgegendruck (p3) aus Betriebsparametern des Ottomotors (10) modelliert wird.

4. Verfahren nach Anspruch 3, **dadurch gekennzeichnet, dass** der Abgasgegendruck (p3) gemessen wird.

5. Verfahren nach Anspruch 3, **dadurch gekennzeichnet, dass** der Abgasgegendruck (p3) ergänzend gemessen wird und gemessene Werte des Abgasgegendrucks (p3) zur Adaption modellierter Werte des Abgasgegendrucks (p3) verwendet werden.

6. Verfahren nach einem der vorhergehenden Ansprüche, **dadurch gekennzeichnet, dass** eine vom Spülgefälle abhängige Ansteuerung des Stellgliedes (42) mit einer Verzögerung (dt) gegenüber einem Wechsel der Last erfolgt.

7. Verfahren nach Anspruch 6, **dadurch gekennzeichnet, dass** ein Ausmaß der Verzögerung (dt) in Abhängigkeit von wenigstens einem Betriebsparameter des Ottomotors (10) vorgegeben wird.

8. Verfahren nach einem der vorhergehenden Ansprüche, **dadurch gekennzeichnet, dass** der Turbinenströmungsquerschnitt in stationären Betriebszuständen des Ottomotors (10) durch einen geschlossenen Regelkreis mit einem Ladedruck (p_lade_ist) als zu regelnder Größe eingestellt wird.

9. Steuergerät (52) eines Verbrennungsmotors in einem Kraftfahrzeug, das dazu eingerichtet ist, ein Stellglied (42) zur Einstellung eines Turbinenströmungsquerschnitts eines Turboladers (36) des Verbrennungsmotors bei einem Wechsel der Last des Verbrennungsmotors von einem kleineren Lastwert auf einen größeren Lastwert anzusteuern, wobei die Einstellung durch eine Regelung eines Spülgefälles des Verbrennungsmotors erfolgt, **dadurch gekennzeichnet, dass** das Steuergerät (52) ferner dazu eingerichtet ist, den Turbinenströmungsquerschnitt bei einem Ottomotor (10) als Verbrennungsmotor zwischen dem Wechsel der Last und einem Beginn einer von dem Spülgefälle abhängigen Einstellung nicht auf einem minimalen Turbinenströmungsquerschnitt festzuhalten.

10. Steuergerät (52) nach Anspruch 9, **dadurch gekennzeichnet, dass** es dazu eingerichtet ist, einen Ablauf eines Verfahrens nach einem der Ansprüche 2 bis 8 zu steuern.
